# EUROPÄISCHE PATENTSCHRIFT

(11) **EP 3 386 669 B1**
(45) Veröffentlichungstag und Bekanntmachung des Hinweises auf die Patenterteilung: **29.06.2022**
(21) Anmeldenummer: 16806136.4
(22) Anmeldetag: 07.12.2016
(51) Int. Cl.: B23F 17/00, B23F 5/16, B23F 21/00, B23F 21/12

(54) **VORRICHTUNG UND VERFAHREN ZUM SCHRUPP- UND FEINBEARBEITEN VON ZAHNRÄDERN**
DEVICE AND METHOD FOR ROUGHING AND FINE-MACHINING GEARS
DISPOSITIF ET PROCÉDÉ D'ÉBAUCHAGE ET D'USINAGE FIN DE ROUES DENTÉES

(30) Priorität: 10.12.2015 DE 102015121523
(43) Veröffentlichungstag der Anmeldung: 17.10.2018
(73) Patentinhaber: Profilator GmbH & Co. KG, 42329 Wuppertal (DE)
(72) Erfinder: ZIMMERMANN, Jonathan, 45145 Essen (DE)
(74) Vertreter: Grundmann, Dirk
(86) Internationale Anmeldenummer: PCT/EP2016/079991
(87) Internationale Veröffentlichungsnummer: WO 2017/097796

(56) Entgegenhaltungen:
- EP-A1- 2 022 576
- EP-A1- 2 570 217
- DE-A1- 19 918 289
- DE-A1-102009 003 338
- DE-A1-102015 106 354
- US-A- 2 258 849
- Fette Gmbh: "Fräsen und Entgraten in einem Arbeitsgang. CHAMFER-CUT Cutting and Deburring in One Process. CHAMFER CUT", , 1. Januar 2004 (2004-01-01), Seiten 1-6, XP55229970, Gefunden im Internet: URL:http://frezyslimakowe.pl/pliki/chamfer _cut.pdf [gefunden am 2015-11-20]

## Beschreibung

### Gebiet der Technik

Die Erfindung betrifft ein Verfahren zum Verzahnen von Werkrädern mit einem Werkzeug, dessen Werkzeuggrundkörper eine Vielzahl von um eine Drehachse angeordnete, radial vom Werkzeuggrundkörper abragende Schneidzähne aufweist, welche Schneidzähne eine Stirnseite, zwei in Umfangsrichtung voneinander weg weisende Zahnflanken und Schneidkanten aufweisen, wobei die Schneidkanten an den an die Stirnseite angrenzenden Rändern der Zahnflanken Schneidkanten aufweisen, wobei in einem ersten Verfahrensschritt in einer ersten Anstellung des Werkzeuges gegenüber dem Werkrad mit den Schneidkanten durch eine zerspanende Bearbeitung Zahnflanken ausbildende Zahnlücken im Werkrad gefertigt werden und in einem zweiten Verfahrensschritt die von den Schneidkanten erzeugten Zahnflanken des Werkrades von einer abrasiven Werkzeugfläche feinbearbeitet werden.

Die Erfindung betrifft darüber hinaus ein Werkzeug zum Durchführen des Verfahrens mit einem Werkzeuggrundkörper, der eine Vielzahl von um eine Drehachse angeordnete, radial vom Werkzeuggrundkörper abragende Schneidzähne aufweist, welche Schneidzähne eine Stirnseite, zwei in Umfangsrichtung voneinander weg weisende Zahnflanken und an den an die Stirnseite angrenzenden der Zahnflanken Schneidkanten zum zerspanenden Erzeugen von Zahnflanken ausbildenden Zahnlücken am Werkrad aufweisen.

Die Erfindung betrifft darüber hinaus eine Vorrichtung zur Durchführung des Verfahrens mit einem Werkzeug, bei dem die elektronische Steuereinrichtung entsprechend programmiert ist.

Ein derartiges Verfahren gemäß dem Oberbegriff des unabhängigen Anspruchs 1, ein derartiges Werkzeug gemäß dem Oberbegriff des unabhängigen Anspruchs 8 und eine derartige Vorrichtung gemäß dem Oberbegriff des unabhängigen Anspruchs 13 sind aus dem Dokument EP 2 570 217 A bekannt.

### Stand der Technik

Die DE 10 2005 049 528 A1 und DE 10 2009 003 338 A1 beschreiben Verfahren zum Verzahnen von innen- oder außenverzahnten Werkstücken, wobei das Verfahren ein Wälzschälverfahren ist. Bei dem dort beschriebenen Verfahren wird zunächst mit einem Schneidwerkzeug eine Grobverzahnung gefertigt. Dies erfolgt in einem Schrupparbeitsgang. Im Anschluss an diesen ersten Verfahrensschritt werden die Zahnflanken im Bereich ihrer stirnseitigen Kanten entgratet. Zum Stand der Technik gehören darüber hinaus die WO2001/060733 A1, die DE 10305752 A1 und die DE 3930322 C1.

Es ist bekannt, die Zahnflanken derart grob verzahnter Verzahnungen durch Honen oder Schleifen feinzubearbeiten. Beim Honen wird hierzu ein auf einer Honradspindel aufgespanntes Honrad verwendet, dessen Honzähne in die im Werkrad gefertigte Verzahnung eingreifen. Die Honzähne greifen dabei in Art einer Laufverzahnung in die Zähne des Werkrades ein. Die Werkzeugdrehachse und die Werkraddrehachse besitzen einen Achskreuzwinkel zueinander, so dass beim aneinander Abgleiten der Zahnflanken von Werkrad und Werkzeug eine Flächenquerbewegung stattfindet, die einen Materialabtrag an der Werkradflanke zur Folge hat.

### Zusammenfassung der Erfindung

Der Erfindung liegt die Aufgabe zugrunde, das bekannte Bearbeitungsverfahren gebrauchsvorteilhaft weiterzubilden und hierzu ein geeignetes Werkzeug und eine geeignete Vorrichtung anzugeben.

Gelöst wird die Aufgabe durch die in den Ansprüchen angegebene Erfindung, wobei die Unteransprüche vorteilhafte Weiterbildungen der in den nebengeordneten Ansprüchen angegebenen Erfindung sind.

Zunächst und im Wesentlichen wird vorgeschlagen, dass das Werkzeug abrasive Zahnflanken aufweist. Mit dem Werkzeug können zwei Fertigungsschritte eines aus mehreren aufeinander folgenden Fertigungsschritten bestehenden Fertigungsverfahrens durchgeführt werden. Dies erfolgt ohne einen zwischenzeitigen Werkzeugwechsel, sondern lediglich durch eine Änderung der Anstellung der Werkzeugdrehachse zur Werkstückdrehachse. In einem ersten Verfahrensschritt werden die Schneidkanten des Werkzeuges verwendet, um damit eine Verzahnung des Werkrades herzustellen. Die Verzahnung des Werkrades kann in mehreren aufeinander folgenden zerspanenden Bearbeitungsschritten durchgeführt werden, beispielsweise in mehreren aufeinander folgenden Wälzschälbearbeitungsschritten, bei denen zunächst eine Grobverzahnung und anschließend eine Feinverzahnung erzeugt werden. Es ist aber auch möglich, die Verzahnung in einem einzigen Wälzschälbearbeitungsschritt durchzuführen, wobei insbesondere vorgesehen ist, dass mit einem Werkzeug die Verzahnung in mehreren aufeinander folgenden Schritten durchgeführt wird, wobei zwischen den einzelnen Schritten lediglich der Achsabstand von Werkraddrehachse und Werkstückdrehachse geändert wird, so dass die von den Schneidkanten erzeugten Zahnlücken Schritt für Schritt vertieft werden. Beim Wälzschälfräsen greifen Schneidkanten jedes Schneidzahnes schälend in den Werkstoff des Werkrades ein, wobei ein Vorschub der kontinuierlich drehangetriebenen Werkstückspindel gegenüber der Werkzeugspindel in Zahnerstreckungsrichtung der zu fertigenden Zähne vorgesehen ist. Die Bearbeitung erfolgt in einem ersten Achskreuzwinkel zwischen Werkzeugdrehachse und Werkraddrehachse. Die Schneidkanten werden von der Kante gebildet, an der die Zahnflanken des Schneidzahnes in eine Stirnfläche des Schneidzahnes übergehen. Bei dem Schneidrad kann es sich um ein Schneidrad mit einem Treppenschliff oder einem Kegelmantelschliff handeln. Das Schneidrad kann aber auch eine plane Stirnfläche aufweisen, in der auch die Stirnflächen der Schneidzähne liegen. In einem erfindungsgemäß zweiten Bearbeitungsschritt werden die von den Schneidkanten des Werkzeuges gefertigten Zahnflanken des Werkrades feinbearbeitet. Dies erfolgt erfindungsgemäß mittels einer abrasiven Werkzeugfläche in der Art einer Honbearbeitung. Hierzu ist vorgesehen, dass die abrasiven Werkzeugflächen von den Zahnflanken des Werkzeuges ausgebildet sind. Diese werden durch eine Verstellung der Relativlage von Werkzeug und Werkrad in einer zweiten Anstellung, die von der ersten Anstellung verschieden ist, in eine Flächenbearbeitungsstellung der Zahnflanken des Werkrades gebracht. Dies erfolgt im Wesentlichen durch eine Änderung des Achskreuzwinkels zwischen Werkraddrehachse und Werkzeugdrehachse und des Achsabstandes bzw. durch eine räumliche Verlagerung von Werkstück und/oder Werkzeug relativ zueinander. Während in der ersten Anstellung beim Erzeugen der Verzahnung zwischen den Zahnflanken des Werkrades und den Zahnflanken des Schneidrades jeweils Freiwinkel existieren, wälzen sich in der zweiten Anstellung bei der Feinbearbeitung die Zahnflanken des Werkzeuges an den Zahnflanken des Werkrades ein, so dass eine Flächenbearbeitung der Zahnflanken des Werkrades mittels abrasiver Werkzeugflächen erfolgt. Die Anstellung von Werkzeug zu Werkrad wird dabei im Wesentlichen durch die Änderung des Achskreuzwinkels derart geändert, dass die bei der im ersten Verfahrensschritt erforderlichen Freiwinkel verschwinden, so dass die Schneidzähne in der Art einer Laufverzahnung in die Zahnlücken des Werkrades eingreifen. Die Schneidzähne haben eine derartige Erstreckungsrichtung gegenüber der Achse des Werkzeuges, dass im zweiten Bearbeitungsschritt eine Flächenquerbewegung der aneinander angreifenden Zahnflanken stattfindet.

Das zur Durchführung des zuvor beschriebenen Verfahrens erfindungsgemäße Werkzeug besitzt einen Werkzeuggrundkörper, der eine Vielzahl von um eine Drehachse angeordneten, radial vom Werkzeuggrundkörper abragenden Schneidzähnen aufweist. Diese Schneidzähne besitzen zumindest an ihren Stirnseiten Schneidkanten, wobei die Schneidkanten entlang der Kanten verlaufen, an denen die Stirnseiten in die Zahnflanken der Schneidzähne übergehen. Die Schneidzähne besitzen in ihrer Erstreckungsrichtung einen im Wesentlichen gleichbleibenden Querschnitt. Bevorzugt verlaufen die durch den Zahnkopf der Schneidzähne gelegten Scheitellinien auf einer Zylindermantelfläche. Es ist aber auch vorgesehen, dass die Scheitellinien auf einer Kegelstumpfmantelfläche verlaufen. Während die Schneidkanten zum zerspanenden Erzeugen von Zahnflanken ausbildenden Zahnlücken des Werkrades verwendet werden, können die an die Schneidkanten angrenzenden Zahnflanken des Werkzeuges zum Feinbearbeiten der von den Schneidkanten erzeugten Zahnflanken des Werkrades verwendet werden. Hierzu sind die Zahnflanken des Werkzeuges abrasiv ausgebildet. Die Zahnflanken des Werkzeuges sind derart abrasiv ausgebildet, dass eine Relativbewegung der Zahnflanken des Werkzeuges an den Zahnflanken des Werkrades zu einem honenden oder schleifenden Materialabtrag an der Zahnflanke des Zahnes des Werkrades führt. Die abrasive Zahnflanke des Werkzeuges wird bevorzugt von einer Beschichtung ausgebildet. Es kann sich dabei um eine Hartstoffbeschichtung handeln. Hierzu kann auf die Zahnflanken eine Metallisierung aufgebracht werden, in der die Hartstoffteilchen in bekannter Weise eingebettet sind. Beispielsweise werden die Zahnflanken des Werkzeuges vernickelt. Auf eine Nickelgrundschicht wird eine Nickeleinfassungsschicht aufgebracht, in der eine Vielzahl von Hartstoffteilchen eingebettet sind, die mit einem Abschnitt ihrer Oberfläche aus der Metallschicht herausragen, um so in der Art eines Abrichtwerkzeuges für Honsteine an den Zahnflanken des Werkrades Material abzutragen. Bei den Hartstoffteilchen kann es sich um Bornitrit-, Aluminiumoxid- oder Diamantteilchen handeln.

Die Erfindung betrifft darüber hinaus eine Vorrichtung zur Durchführung des Verfahrens. Die Vorrichtung besitzt in bekannter Weise zumindest eine Werkstückspindel und eine Werkzeugspindel. Die Werkstückspindel und die Werkzeugspindel sind bevorzugt jeweils von Drehantriebsaggregaten drehantreibbar. Es kann sich dabei um Servo-Motoren, insbesondere um Torque-Motoren oder aber auch um Synchron-Motoren handeln. Grundsätzlich reicht es für die Durchführung des Verfahrens aber aus, wenn lediglich eine Spindel von einem elektrischen Antrieb drehantreibbar ist. Bevorzugt sind jedoch beide Spindeln, also Werkzeugspindel und Werkstückspindel, von einem Drehantrieb drehantreibbar. Beide Drehantriebe sind synchronisiert, so dass sie im Gleichlauf drehen. Es sind ferner Mittel, beispielsweise in Form eines Kreuztisches, vorgesehen, mit denen das Werkzeug gegenüber dem Werkrad vorgeschoben werden kann, wobei der Vorschub im Wesentlichen in Zahnflankenerstreckungsrichtung des Werkrades erfolgt. Zur Erzeugung des Vorschubes kann entweder das Werkzeug oder das Werkrad gegenüber einem Maschinengestell verlagert werden. Es sind ferner Mittel vorgesehen, mit denen der Achskreuzwinkel zwischen Werkzeugdrehachse und Werkstückdrehachse einstellbar ist. Sämtliche Mittel zum Verstellen können von Schrittmotoren und/oder Torque-Motoren ausgebildet sein. Die Vorrichtung besitzt eine elektronische, programmierbare Steuerung, mit der die einzelnen Achsen der Werkzeugmaschine angesteuert werden könne. Die Steuereinrichtung ist derart programmiert, dass die Werkzeugmaschine mit dem zuvor beschriebenen Werkzeug nach dem zuvor beschriebenen Verfahren arbeitet.

### Kurze Beschreibung der Zeichnungen

Im Folgenden wird die Erfindung anhand eines Ausführungsbeispiels näher erläutert. Es zeigen:
- Fig. 1: schematisch ein zahnradartiges Werkzeug 2, dessen Schneidzähne 3 in einem Zahneingriff zu der Verzahnung eines Werkrades 1 stehen zur Verdeutlichung der Anstellung von Werkrad 1 gegenüber Werkzeug 2 bei einem ersten Verfahrensschritt, bei dem eine Verzahnung im Werkrad 1 erzeugt wird;
- Fig. 2: die Anordnung gemäß Fig. 1, jedoch in Blickrichtung II in Fig. 1;
- Fig. 3: die Anordnung in Fig. 1, jedoch in der Draufsicht auf das Werkrad 1;
- Fig. 4: vergrößert den in der Fig. 3 dargestellten Eingriff der Schneidzähne 3 in die Zahnlücken 17 zwischen den Zähnen 13 des Werkrades 1 zur Verdeutlichung des Freiwinkels zwischen den Zahnflanken der Schneidzähne 3 und der Zähne 13;
- Fig. 5: eine perspektivische Darstellung des Werkzeuges, dessen Schneidkanten 18, 19 von den Kanten ausgebildet sind, an denen abrasiv beschichtete Zahnflanken 6, 6' der Schneidzähne 3 die Stirnflächen 7 der Schneidzähne 3 treffen;
- Fig. 6: eine Darstellung gemäß Fig. 1, jedoch in einer zweiten Anstellung, in der der Achskreuzwinkel zwischen Werkraddrehachse 4 und Werkzeugdrehachse 5 verändert worden ist und zusätzlich die Position des Werkzeuges 2 in Richtung der Werkzeugdrehachse 5 verschoben ist, so dass die abrasiven Zahnflanken 6, 6' die Zahnflanken 14, 14' der Verzahnung des Werkrades 1 bearbeiten können;
- Fig. 7: eine Darstellung gemäß Fig. 2, jedoch in der zweiten Anstellung;
- Fig. 8: eine Darstellung gemäß der Fig. 3, jedoch in der zweiten Anstellung;
- Fig. 9: den Ausschnitt IX in der Fig. 8 zur Verdeutlichung des Eingriffs des Schneidzahnes 3 in die Zahnlücke 17 zwischen den Zähnen 13 des Werkrades 1, wobei zwischen den Zahnflanken 6, 6' der Schneidzähne 3 und den Zahnflanken 14, 14' der Zähne 3 des Werkrades 1 kein Freiwinkel vorhanden ist, sondern eine abrasiv ausgebildete Zahnflanke 6' des Schneidzahnes 3 in Flächenberührung an der Zahnflanke 14' eines Zahnes 13 des Werkrades 1 angreift;
- Fig. 10: eine Darstellung gemäß Fig. 9, jedoch nachdem das Werkrad 1 und das Werkzeug 2 geringfügig weitergedreht worden sind, so dass die abrasiv ausgebildete Zahnflanke 6 des Schneidzahnes 3 in Flächenanlage an der Zahnflanke 14 eines Nachbarzahnes des Werkrades 1 anliegt;
- Fig. 11: vergrößert den Ausschnitt XI in Fig. 1;
- Fig. 12: den Schnitt XII - XII in Fig. 11 und
- Fig. 13: schematisch eine Vorrichtung zur Durchführung des Verfahrens.

### Beschreibung der Ausführungsformen

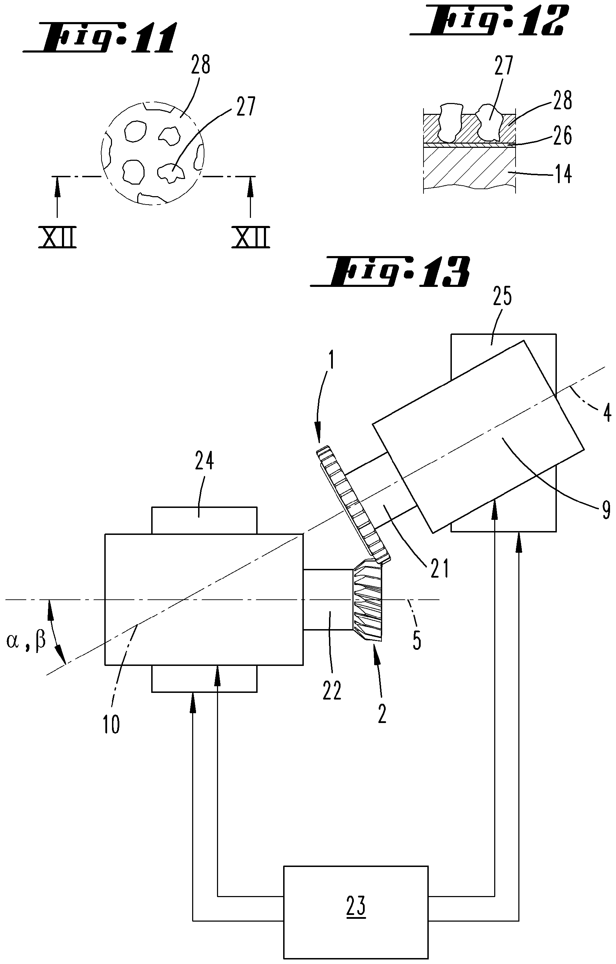

Die Figur 13 zeigt grob schematisch eine Vorrichtung zur Durchführung des Verfahrens. An einem nicht dargestellten Maschinengestell sind Vorrichtungen 24, 25 befestigt, mit denen ein Werkstückspindelantrieb 9 und ein Werkzeugspindelantrieb 10 gegeneinander verstellt werden kann. Das Verstellen erfolgt programmgesteuert von einer elektronischen Steuereinrichtung 23. Die Verstell-/Einstellmittel 24, 25 sind in der Lage, die Relativpositionen von Werkstückspindelantrieb 9 und Werkzeugspindelantrieb 10 relativ zueinander zu verlagern. Vom Werkstückspindelantrieb 9 wird eine Werkradspindel 21 drehangetrieben, die ein Werkrad 1 trägt. Das Werkrad 1 wird dabei um eine Werkraddrehachse 4 drehangetrieben.

Der Werkzeugspindelantrieb 10 treibt eine Werkzeugspindel 22 an, die ein zahnradförmig ausgebildetes Werkzeug 2 trägt, welches um eine Werkzeugdrehachse 5 drehantreibbar ist.

Mittels der Verstell-/Einstellmittel 24, 25 kann der Achskreuzwinkel a, β der Werkraddrehachse 4 gegenüber der Werkzeugdrehachse 5 eingestellt werden. Darüber hinaus kann ein Vorschub realisiert werden.

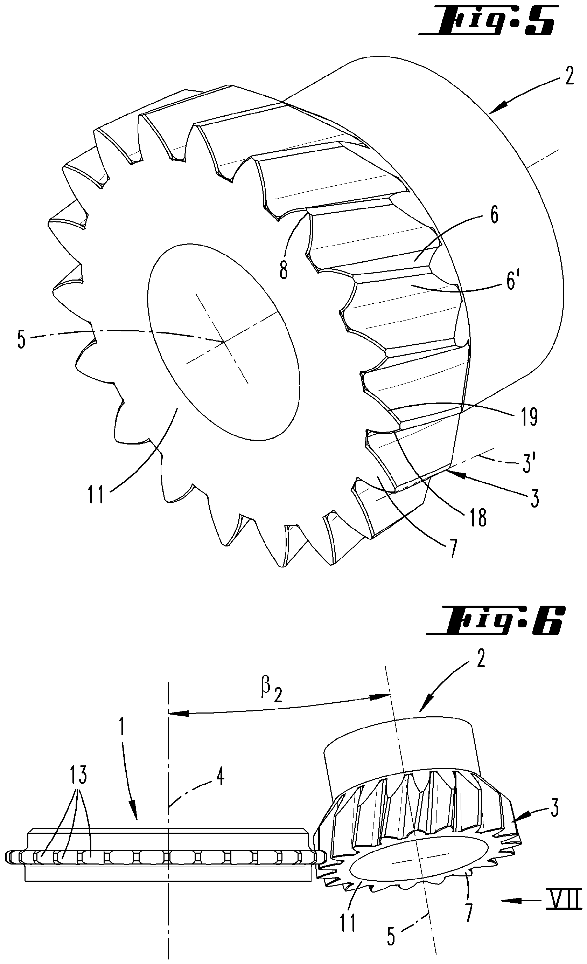

Das in der Figur 5 dargestellte Werkzeug besitzt einen Werkzeuggrundkörper 11, der auf einer Werkzeugspindel 22 aufgespannt werden kann, um den Werkzeuggrundkörper 11 um die Werkzeugdrehachse 5 drehanzutreiben.

Vom Werkzeuggrundkörper 11 ragen in Radialrichtung bezogen auf die Werkzeugdrehachse 5 mehrere Schneidzähne 3 ab. Die Schneidzähne 3 besitzen über ihre gesamte axiale Erstreckung eine gleichbleibende Querschnittsfläche. Die durch die Zahnköpfe 8 der Schneidzähne gezogene Scheitellinie 3' verläuft beim Ausführungsbeispiel schräg zur Werkzeugdrehachse 5. Die Scheitellinien 3' können auf einer Zylindermantelfläche um die Werkzeugdrehachse 5 oder auf einer Kegelstumpfmantelfläche um die Werkzeugdrehachse 5 liegen. Die Schneidzähne 3 erstrecken sich je nach Bearbeitungsaufgabe bevorzugt in gleichmäßiger Winkelverteilung um die Werkzeugdrehachse 5.

Jeder der Schneidzähne 3 besitzt eine Stirnfläche 7, die unter Ausbildung einer Kante zwei in Umfangsrichtung voneinander weg weisenden Zahnflanken 6, 6' des Schneidzahnes 3 schneidet. Die Kante bildet Schneidkanten 18, 19 aus. Beim Ausführungsbeispiel wird eine Schneidkante 19 von einer Furche und die gegenüberliegende Schneidkante von einer Fase ausgebildet, so dass beide Schneidkanten der schrägen Schneidzähne 3 mit demselben Spanwinkel in das Werkstück einschneiden können, obwohl die Stirnseite 7 eine Radialfläche zur Werkzeugdrehachse 5 ist.

In einer alternativen Ausführungsform verlaufen die Kanten zwischen Stirnseite 7 und Zahnflanken 6, 6' rechtwinklig oder spitzwinklig. Die Stirnseite des Schneidwerkzeuges 2 besitzt dann einen Treppenschliff.

Die Zahnflanken 6, 6' sind abrasiv ausgebildet. Hierzu ist insbesondere vorgesehen, dass die Zahnflanken 6, 6' eine Metallschicht 28, insbesondere eine Nickelschicht, tragen, in der Hartstoffpartikel 27, insbesondere Diamantpartikel, eingebettet sind, die mit Oberflächenabschnitten aus der Metallschicht 28 herausragen, um eine abrasive Wirkung zu erzeugen. Die Metallschicht 28 kann eine Einfassungsschicht sein, die auf eine unmittelbar auf den Stahlgrundkörper der Zahnflanke 14 aufgebrachten Anlageschicht 26 abgeschieden worden ist. Die Anlageschicht 26 und die Einfassungsschicht 28 können galvanisch aufgebrachte Metallschichten, insbesondere Nickelschichten sein.

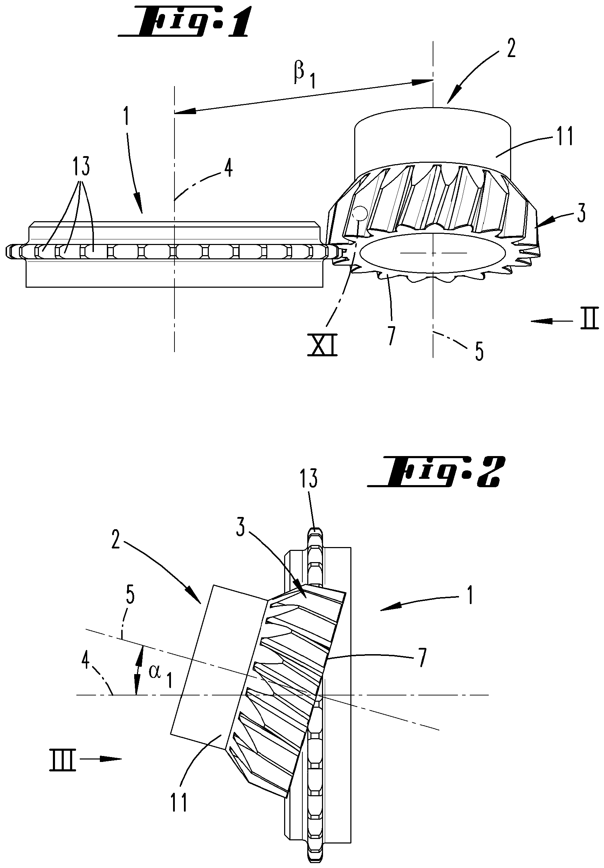

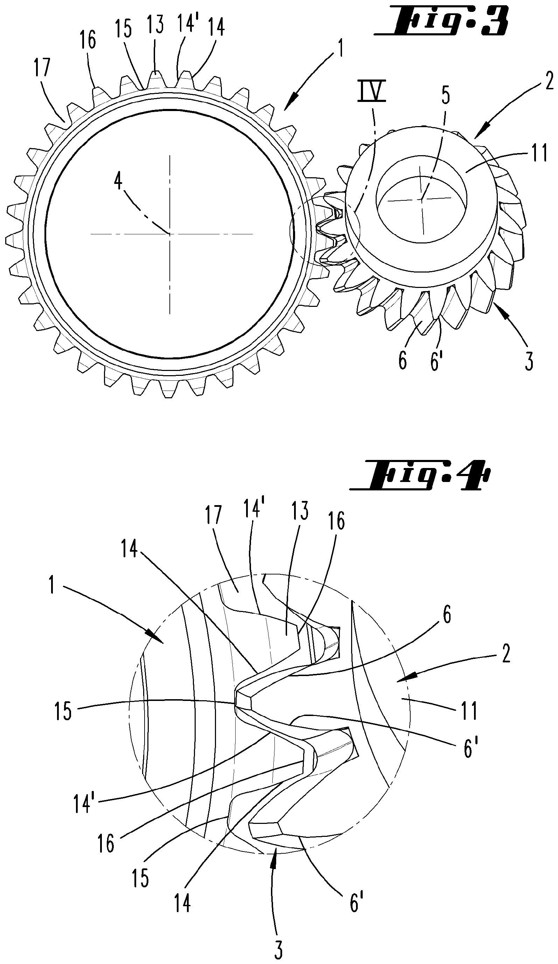

Mit dem erfindungsgemäßen Werkzeug 2 ist es möglich, in einem ersten Bearbeitungsschritt, den die Figuren 1 bis 4 zeigen, in ein unverzahntes oder grob verzahntes oder grob vorverzahntes Werkrad 1 eine Verzahnung einzuarbeiten. Dies erfolgt in einem ersten Schruppschritt, dem sich aber auch ein Feinbearbeitungsschritt anschließen kann, bei dem die Schneidkanten 18, 19 mit geringerem Vorschub und geringerer Zerspanungsleistung ins Werkrad 1 eintauchen.

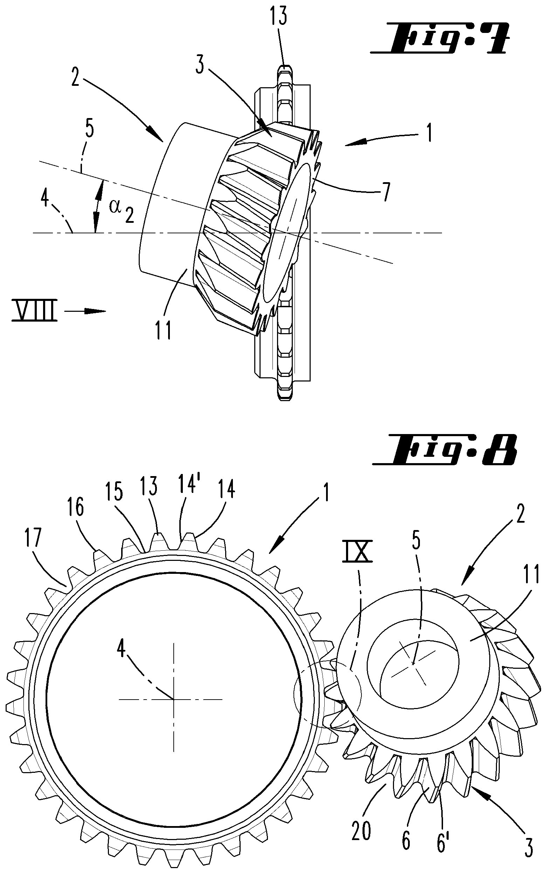

Dem ersten, in den Figuren 1 bis 4 dargestellten Verfahrensschritt, bei dem die Verzahnung erzeugt wird, schließt sich erfindungsgemäß der in den Figuren 6 bis 10 dargestellte zweite Bearbeitungsschritt an, bei dem mit demselben Werkzeug 2, jedoch nicht mit dessen Schneidkanten 18,19, sondern mit den abrasiv ausgerüsteten Zahnflanken 6, 6' die Zahnflanken 14,14' des Werkrades 1 feinbearbeitet werden.

In dem in den Figuren 1 bis 4 dargestellten ersten Verfahrensschritt wird die Werkzeugspindel 22 in einen derartigen Achskreuzwinkel α₁, β₁ zur Werkstückspindel 21 gebracht, dass bei einer synchronisierten Drehung von Werkstückspindel 21 und Werkzeugspindel 22 und einem Vorschub in Zahnerstreckungsrichtung der Zähne 13 des Werkrades 1 eine schälende Bearbeitung stattfindet, während derer die Zahnflanken 14, 14' der Zahnlücken 17 zwischen den Zähnen 13 des Werkrades 1 erzeugt werden. Dabei besitzen die Zahnflanken 6, 6' des Werkzeuges einen keilförmigen Abstand zu den Zahnflanken 14, 14' der Zähne 13 des Werkrades 1. Dieser Freiwinkel ist in der Figur 6 erkennbar.

Im ersten Bearbeitungsschritt können die Zahnlücken 17 schrittweise vertieft werden.

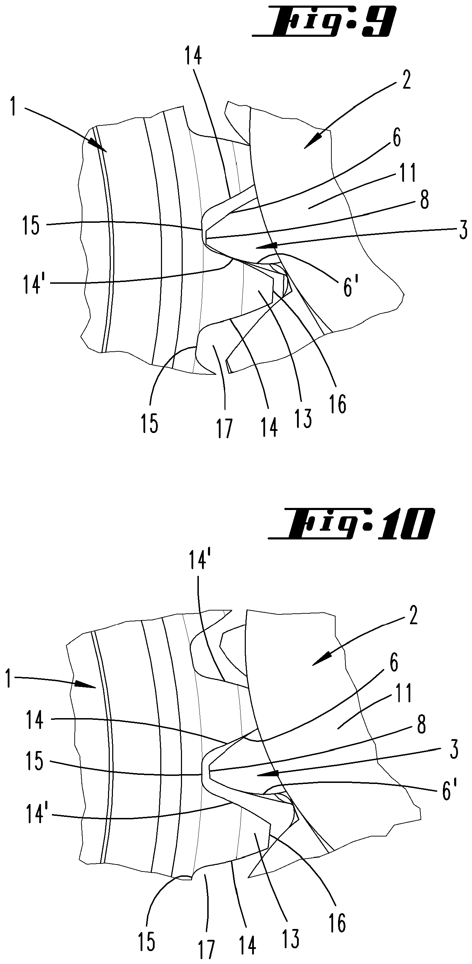

In einem sich an den ersten Bearbeitungsschritt bevorzugt unmittelbar anschließenden zweiten Bearbeitungsschritt, der in den Figuren 6 bis 10 dargestellt ist, erfolgt eine Zahnflankenbearbeitung der Zahnflanken 14, 14'. Hierzu wird der Achskreuzwinkel bzw. die räumliche Lage des Werkzeuges zum Werkstück geändert. In der zweiten Anstellung zur Durchführung des zweiten Verfahrensschrittes ist der Achskreuzwinkel α₂, β₂ derart eingestellt, dass der Freiwinkel zwischen den Zahnflanken 6, 14 bzw. 6', 14' verschwindet. Die Figur 9 zeigt, dass eine abrasiv beschichtete Zahnflanke 6' des Schneidzahnes 3 in Flächenanlage zur Zahnflanke 14' eines Zahnes 13 des Werkrades 1 anliegt. Werden das zahnradförmige Schneidwerkzeug 2 und das verzahnte Werkrad 1 im zweiten Bearbeitungsschritt in gegenseitigem Zahneingriff relativ zueinander verdreht, so wälzen sich die Zahnflanken 6' an den Zahnflanken 14' ab. Wegen des Achskreuzwinkels α₂, β₂ erfolgt eine schleifende Bewegung. Es stellt sich eine Flächenquerbewegung ein, so dass die abrasiven Partikel der Zahnflanke 6' Material von der Zahnflanke 14' abtragen.

In der Figur 10 ist eine Betriebsstellung dargestellt, die sich unmittelbar an die in der Figur 9 dargestellten Betriebsstellung anschließt, wenn die beiden ineinander greifenden zahnradförmigen Körper des Werkrades 1 und des Werkzeuges 2 geringfügig weiter gedreht worden sind. In der Art einer Laufverzahnung greift dann die der Zahnflanke 6' gegenüberliegende, ebenfalls abrasiv beschichtete Zahnflanke 6 an der der Zahnflanke 14' gegenüberliegenden Zahnflanke 14 des Werkrades 1 an, um diese durch abrasiven Materialabtrag fein zu bearbeiten.

Die vorstehenden Ausführungen dienen der Erläuterung der von der Anmeldung insgesamt erfassten Erfindungen, die den Stand der Technik zumindest durch die folgenden Merkmalskombinationen weiterbilden, nämlich:

Ein Verfahren, das dadurch gekennzeichnet ist, dass die abrasiven Werkzeugflächen von den Zahnflanken 6, 6' des Werkzeuges 2 ausgebildet werden, welche im zweiten Verfahrensschritt mit einer zweiten Anstellung, die von der ersten Anstellung verschieden ist, zum Werkrad 1 arbeitet.

Beim Verfahren können die Zahnflanken 6, 6' des Werkzeuges 2 in der ersten Anstellung einen Freiwinkel zu den Zahnflanken 14,14' des Werkrades 1 aufweisen.

Beim Verfahren können die Zahnflanken 6, 6' des Werkzeuges 2 in der zweiten Anstellung zur Flächenbearbeitung an den Zahnflanken 14, 14' des Werkrades 1 abwälzen.

Beim Verfahren können die Werkzeugdrehachse 5 und die Werkraddrehachse 4 in den beiden Anstellungen verschiedene Achskreuzwinkel α₁, β₁, α₂, β₂ einnehmen.

Beim Verfahren kann der erste Bearbeitungsschritt eine Wälzschälbearbeitung sein.

Beim Verfahren kann der zweite Bearbeitungsschritt ein dem Honen ähnlicher Bearbeitungsschritt sein, wobei die Schneidzähne 3 in der Art einer Laufverzahnung in die Zahnlücken 17 des Werkrades 1 eingreifen.

Beim Verfahren kann eine durch den Achskreuzwinkel α₂, β₂ vorgegebene Flächenquerbewegung der im zweiten Bearbeitungsschritt aneinander angreifenden Zahnflanken 6' 14', 6, 14 aufweisen.

Ein Werkzeug, das dadurch gekennzeichnet ist, dass die Zahnflanken 6, 6' des Werkzeuges 2 zum Feinbearbeiten der von den Schneidkanten 18, 19 erzeugten Zahnflanken 14, 14' des Werkrades 1 abrasiv ausgebildet sind.

Beim Werkzeug können die Zahnflanken 6, 6' des Werkzeuges 2 abrasiv beschichtet sind, insbesondere eine Hartstoffbeschichtung 26 bis 28 aufweisen.

Beim Werkzeug können die Zahnflanken 6, 6' des Werkzeuges 2 eine in eine Metallschicht 28, insbesondere Nickelschicht, eingebettete Hartstoffteilchen 27, insbesondere Bornitrit, Aluminiumoxid oder Diamanten aufweisen.

Beim Werkzeug kann die Zahnerstreckungsrichtung der Schneidzähne 3 schräg zur Drehachse 5 verlaufen.

Beim Werkzeug kann eine Scheitellinie 3' der Schneidzähne 3 in einer Kegelstumpfmantelfläche oder einer Zylindermantelfläche um die Drehachse 5 verlaufen.

Eine Vorrichtung, die dadurch gekennzeichnet ist, dass die Steuereinrichtung 23 derart eingerichtet ist, dass in einem ersten Verfahrensschritt in einer ersten Anstellung des Werkzeuges 2 gegenüber dem Werkrad 1 mit Schneidkanten 18, 19 des Werkrades 1 durch eine zerspanende Bearbeitung der Zahnflanken 14, 14' ausbildende Zahnlücken 17 im Werkrad 1 gefertigt werden und in einem zweiten Verfahrensschritt die von den Schneidkanten 18, 19 erzeugten Zahnflanken 14, 14' des Werkrades 1 von einer abrasiven Werkzeugfläche, die von den Zahnflanken 6, 6' des Werkzeuges 2 gebildet sind, feinbearbeitet werden, wobei der zweite Verarbeitungsschritt in einer zweiten Anstellung durchgeführt wird, die von der ersten Anstellung verschieden ist.

### Liste der Bezugszeichen

| | | | |
|---|---|---|---|
| 1 | Werkrad | 26 | Anlageschicht |
| 2 | Schneidwerkzeug | 27 | Hartstoffpartikel |
| 3 | Schneidzahn | 28 | Einfassungsschicht |
| 3' | Scheitellinie | | |
| 4 | Werkraddrehachse | α | Achskreuzwinkel |
| 5 | Werkzeugdrehachse | β | Achskreuzwinkel |
| 6 | Zahnflanke | | |
| 6' | Zahnflanke | | |
| 7 | Stirnseite | | |
| 8 | Zahnkopf | | |
| 9 | Werkstückspindelachse | | |
| 10 | Werkzeugspindelachse | | |
| 11 | Werkzeuggrundkörper | | |
| 13 | Zahn | | |
| 14 | Zahnflanke | | |
| 14' | Zahnflanke | | |
| 15 | Zahngrund | | |
| 16 | Zahnkopf | | |
| 17 | Zahnlücke | | |
| 18 | Schneidkante | | |
| 19 | Schneidkante | | |
| 20 | Schneidzahnlücke | | |
| 21 | Werkradspindel | | |
| 22 | Werkzeugspindel | | |
| 23 | Steuereinrichtung | | |
| 24 | Vorschub-/Einstellmittel | | |
| 25 | Vorschub-/Einstellmittel | | |

## Patentansprüche

1. Verfahren zum Verzahnen von Werkrädern (1) mit einem Werkzeug (2), dessen Werkzeuggrundkörper (11) eine Vielzahl von um eine Drehachse (5) angeordnete, radial vom Werkzeuggrundkörper (11) abragende Schneidzähne (3) aufweist, welche Schneidzähne (3) eine Stirnseite (7), zwei voneinander weg weisende Zahnflanken (6, 6') sowie Schneidkanten (18, 19) ausbilden, wobei die Schneidkanten (18, 19) von den an die Stirnseite (7) angrenzenden Rändern der Zahnflanken (6, 6') ausgebildet sind, wobei in einem ersten Verfahrensschritt in einer ersten Anstellung des Werkzeuges (2) gegenüber dem Werkrad (1) mit den Schneidkanten (18, 19) durch eine zerspanende Bearbeitung Zahnflanken (14, 14') ausbildende Zahnlücken (17) im Werkrad (1) gefertigt werden und in einem zweiten Verfahrensschritt die von den Schneidkanten (18, 19) erzeugten Zahnflanken (14, 14') des Werkrades (1) von einer abrasiven Werkzeugfläche feinbearbeitet werden, **dadurch gekennzeichnet, dass** die abrasiven Werkzeugflächen von den Zahnflanken (6, 6') des Werkzeuges (2) ausgebildet werden, welche im zweiten Verfahrensschritt mit einer zweiten Anstellung, die von der ersten Anstellung verschieden ist, zum Werkrad (1) arbeitet.

2. Verfahren nach Anspruch 1, **dadurch gekennzeichnet, dass** die Zahnflanken (6, 6') des Werkzeuges (2) in der ersten Anstellung einen Freiwinkel zu den Zahnflanken (14, 14') des Werkrades (1) aufweisen.

3. Verfahren nach einem oder mehreren der vorangehenden Ansprüche, **dadurch gekennzeichnet, dass** die Zahnflanken (6, 6') des Werkzeuges (2) in der zweiten Anstellung zur Flächenbearbeitung an den Zahnflanken (14, 14') des Werkrades (1) abwälzen.

4. Verfahren nach einem oder mehreren der vorangehenden Ansprüche, **dadurch gekennzeichnet, dass** die Werkzeugdrehachse (5) und die Werkraddrehachse (4) in den beiden Anstellungen verschiedene Achskreuzwinkel (α₁, β₁; α₂, β₂) einnehmen.

5. Verfahren nach einem oder mehreren der vorangehenden Ansprüche, **dadurch gekennzeichnet, dass** der erste Bearbeitungsschritt eine Wälzschälbearbeitung ist.

6. Verfahren nach einem oder mehreren der vorangehenden Ansprüche, **dadurch gekennzeichnet, dass** der zweite Bearbeitungsschritt ein dem Honen ähnlicher Bearbeitungsschritt ist, wobei die Schneidzähne (3) in der Art einer Laufverzahnung in die Zahnlücken (17) des Werkrades (1) eingreifen.

7. Verfahren nach einem oder mehreren der vorangehenden Ansprüche, **gekennzeichnet durch** eine durch den Achskreuzwinkel (α₂, β₂) vorgegebene Flächenquerbewegung der im zweiten Bearbeitungsschritt aneinander angreifenden Zahnflanken (6', 14'; 6, 14).

8. Werkzeug (2) zum Verzahnen von Werkrädern (1) mit einem Werkzeuggrundkörper (11), der eine Vielzahl von um eine Drehachse (5) angeordnete, radial vom Werkzeuggrundkörper (11) abragende Schneidzähne (3) aufweist, welche Schneidzähne (3) eine Stirnseite (7), zwei voneinander weg weisende Zahnflanken (6, 6') und an den an die Stirnseite (7) angrenzenden Rändern der Zahnflanken (6, 6') Schneidkanten (18, 19) zum zerspanenden Erzeugen von Zahnflanken (14, 14') ausbildenden Zahnlücken (17) am Werkrad (1) aufweisen, **dadurch gekennzeichnet, dass** die Zahnflanken (6, 6') des Werkzeuges (2) zum Feinbearbeiten der von den Schneidkanten (18, 19) erzeugten Zahnflanken (14, 14') des Werkrades (1) abrasiv ausgebildet sind.

9. Werkzeug nach Anspruch 8, **dadurch gekennzeichnet, dass** die Zahnflanken (6, 6') des Werkzeuges (2) abrasiv beschichtet sind, insbesondere eine Hartstoffbeschichtung (26 bis 28) aufweisen.

10. Werkzeug nach einem oder mehreren der vorangehenden Ansprüche, **dadurch gekennzeichnet, dass** die Zahnflanken (6, 6') des Werkzeuges (2) eine in eine Metallschicht (28), insbesondere Nickelschicht, eingebettete Hartstoffteilchen (27), insbesondere Bornitrit, Aluminiumoxid oder Diamanten aufweisen.

11. Werkzeug nach einem oder mehreren der vorangehenden Ansprüche, **dadurch gekennzeichnet, dass** die Zahnerstreckungsrichtung der Schneidzähne (3) schräg zur Drehachse (5) verläuft.

12. Werkzeug nach einem oder mehreren der vorangehenden Ansprüche, **dadurch gekennzeichnet, dass** eine Scheitellinie (3') der Schneidzähne (3) in einer Kegelstumpfmantelfläche oder einer Zylindermantelfläche um die Drehachse (5) verläuft.

13. Vorrichtung zur Durchführung eines Verfahrens nach einem der Ansprüche 1 bis 7 mit einem Werkzeug nach einem der Ansprüche 8 bis 12, mit einer um eine Werkzeugdrehachse (5) drehbaren Werkzeugspindel (22), mit einer um eine Werkstückdrehachse (4) drehbaren Werkstückspindel (21), von denen mindestens eine von einem Drehantriebsmittel (9, 10) drehantreibbar ist, mit Mitteln (24, 25) zum Erzeugen eines Vorschubs des Werkzeugs (2) relativ gegenüber dem Werkrad (1) und mit Mitteln (24, 25) zum Verstellen eines Achskreuzwinkels (α₁, β₁; α₂, β₂) zwischen Werkzeugdrehachse (5) und Werkstückdrehachse (4) und mit einer elektronischen Steuereinrichtung (23) zur Steuerung des mindestens Drehantriebsmittels (9, 10), **dadurch gekennzeichnet, dass** die Steuereinrichtung (23) derart eingerichtet ist, dass in einem ersten Verfahrensschritt in einer ersten Anstellung des Werkzeuges (2) gegenüber dem Werkrad (1) mit Schneidkanten (18, 19) des Werkzeuges (2) durch eine zerspanende Bearbeitung Zahnflanken (14, 14') ausbildende Zahnlücken (17) im Werkrad (1) gefertigt werden und in einem zweiten Verfahrensschritt die von den Schneidkanten (18, 19) erzeugten Zahnflanken (14, 14') des Werkrades (1) von einer abrasiven Werkzeugfläche, die von den Zahnflanken (6, 6') des Werkzeuges (2) gebildet sind, feinbearbeitet werden, wobei der zweite Verarbeitungsschritt in einer zweiten Anstellung durchgeführt wird, die von der ersten Anstellung verschieden ist.

## Claims

1. A method for cutting teeth into working gears (1) using a tool (2), the main part (11) of which has a multiplicity of cutting teeth (3) which are arranged about an axis of rotation (5), and which protrude radially from the main part (11) of the tool, which cutting teeth (3) form an end face (7), two tooth flanks (6, 6') facing away from each other, and cutting edges (18, 19), wherein the cutting edges (18, 19) are formed from the tooth flank (6, 6') edges adjoining the end face (7), wherein in a first method step, tooth gaps (17) which form tooth flanks (14, 14') are produced in the working gear (1) by means of the cutting edges (18, 19) using a machining process in a first position of the tool (2) relative to the working gear (1), and in a second method step, the working gear (1) tooth flanks (14, 14') produced by the cutting edges (18, 19) are fine-machined by an abrasive tool surface, **characterised in that**, the abrasive tool surfaces are formed by the tooth flanks (6, 6') of the tool (2), which in the second method step operates in a second position, which differs from the first position relative to the working gear (1).

2. The method in accordance with claim 1, **characterised in that**, in the first position the tooth flanks (6, 6') of the tool (2) have a clearance angle relative to the tooth flanks (14, 14') of the working gear (1).

3. The method in accordance with one or a plurality of the preceding claims, **characterised in that**, in the second position for surface processing the tooth flanks (6, 6') of the tool (2) roll from the tooth flanks (14, 14') of the working gear (1).

4. The method in accordance with one or a plurality of the preceding claims, **characterised in that**, the tool axis of rotation 5 and the working gear axis of rotation 4 assume different axis crossing angles α₁, β₁, α₂, β₂ in the two positions.

5. The method in accordance with one or a plurality of the preceding claims, **characterised in that**, the first process step is a hob skiving process.

6. The method in accordance with one or a plurality of the preceding claims, **characterised in that**, the second process step is a process step similar to honing, wherein the cutting teeth (3) engage in the manner of a meshing gear with the tooth gaps (17) of the working gear (1).

7. The method in accordance with one or a plurality of the preceding claims, **characterised by** a surface transverse movement of the tooth flanks (6', 14', 6, 14) as determined by the axis crossing angles (α₂, β₂), which engage with each other in the second process step.

8. A tool (2) for cutting the teeth of working gears (1) with a main part (11), which has a multiplicity of cutting teeth (3) arranged about an axis of rotation (5) and protruding radially from the main part (11) of the tool, which cutting teeth (3) have an end face (7), two tooth flanks (6, 6') facing away from each other, and cutting edges (18, 19) on the edges of the tooth flanks (6, 6') adjacent to the end face (7) for the generation by machining of tooth gaps (17) forming tooth flanks (14, 14') on the working gear (1), **characterised in that**, the tooth flanks (6, 6') of the tool (2) are abrasively formed for the fine-machining of the tooth flanks (14, 14') of the working gear (1) generated by the cutting edges (18, 19).

9. The tool in accordance with claim 8, **characterised in that**, the tooth flanks (6, 6') of the tool (2) are abrasively coated, in particular have a hard material coating (26 to 28).

10. The tool in accordance with one or a plurality of the preceding claims, **characterised in that**, the tooth flanks (6, 6') of the tool (2) have hard material particles (27), in particular boron nitride, aluminium oxide, or diamonds, embedded in a metal layer (28), in particular a nickel layer.

11. The tool in accordance with one or a plurality of the preceding claims, **characterised in that**, the direction of extent of the cutting teeth (3) runs at an angle to the axis of rotation (5).

12. The tool in accordance with one or a plurality of the preceding claims, **characterised in that**, a vertex line (3') of the cutting teeth (3) runs on a truncated conical surface, or a cylindrical surface, about the axis of rotation (5).

13. A device for the execution of a method in accordance with one of the claims 1 to 7, with a tool in accordance with one of the claims 8 to 12, with a tool spindle (22) that can rotate about a tool axis of rotation (5), with a workpiece spindle (21) that can rotate about a workpiece axis of rotation (4), at least one of which can be rotatably driven by a rotary drive means (9, 10), with means (24, 25) for generating a feed of the tool (2) relative to the working gear (1) and means (24, 25) for adjusting an axis crossing angle (α₁, β₁, α₂, β₂) between the tool axis of rotation (5) and the workpiece axis of rotation (4), and with an electronic control device (23) for controlling the at least one rotary drive means (9, 10), **characterised in that**, the control device (23) is equipped such that in a first method step in a first position of the tool (2) relative to the working gear (1) tooth gaps (17) forming tooth flanks (14, 14') are produced in the working gear (1) with the cutting edges (18, 19) of the tool (2) by a machining process, and in a second method step, the tooth flanks (14, 14') of the working gear (1) generated by the cutting edges (18, 19) are fine-machined by an abrasive tool surface formed by the tooth flanks (6, 6') of the tool (2), wherein the second process step is performed in a second position that differs from the first position.

## Revendications

1. Procédé pour pourvoir des roues à usiner (1) avec des dents avec un outil (2) dont le corps de base (11) présente une pluralité de dents de coupe (3) agencées autour d'un axe de rotation (5) et faisant saillie radialement du corps de base (11) de l'outil, lesquelles dents de coupe (3) forment une face frontale (7), deux flancs de dents (6, 6') orientés à l'opposé l'un de l'autre, ainsi que des arêtes de coupe (18, 19), les arêtes de coupe (18, 19) étant formées par les bords des flancs de dents (6, 6') contigus à la face frontale (7), dans lequel, dans une première étape du procédé, des entredents (17) formant des flancs de dents (14, 14') sont usinés par enlèvement de copeaux dans la roue à usiner (1) avec les arêtes de coupe (18, 19) dans une première position de l'outil (2) par rapport à la roue à usiner (1), et, dans une deuxième étape du procédé, les flancs de dents (14, 14') de la roue à usiner (1) générés par les arêtes de coupe (18, 19) sont soumis à un traitement de finition par une surface d'outil abrasive, **caractérisé en ce que** les surfaces d'outil abrasives sont formées par les flancs de dents (6, 6') de l'outil (2) qui, dans la deuxième étape du procédé, travaille dans une deuxième position par rapport à la roue d'outil (1) qui est différente de la première position.

2. Procédé selon la revendication 1, **caractérisé en ce que** les flancs de dents (6, 6') de l'outil (2) présentent, dans la première position, un angle de dépouille par rapport aux flancs de dents (14, 14') de la roue à usiner (1).

3. Procédé selon une ou plusieurs des revendications précédentes, **caractérisé en ce que** les flancs de dents (6, 6') de l'outil (2) dans la deuxième position roulent contre les flancs de dents (14, 14') de la roue à usiner (1) pour traiter la surface.

4. Procédé selon une ou plusieurs des revendications précédentes, **caractérisé en ce que** l'axe de rotation (5) de l'outil et l'axe de rotation (4) de la roue à usiner forment des angles de croisement d'axes (α₁, β₁ ; α₂, β₂) différents dans les deux positions.

5. Procédé selon une ou plusieurs des revendications précédentes, **caractérisé en ce que** la première étape d'usinage est un usinage par génération.

6. Procédé selon une ou plusieurs des revendications précédentes, **caractérisé en ce que** la deuxième étape d'usinage est une étape d'usinage similaire au pierrage, les dents de coupe (3) s'engageant dans les entredents (17) de la roue à usiner (1) à la manière d'une denture d'engrènement.

7. Procédé selon une ou plusieurs des revendications précédentes, **caractérisé par** un mouvement transversal de surface, prédéterminé par l'angle de croisement d'axes (α₂, β₂), des flancs de dents (6', 14' ; 6, 14) agissant l'un sur l'autre lors de la deuxième étape d'usinage.

8. Outil (2) pour pourvoir des roues à usiner (1) avec des dents, avec un corps de base d'outil (11) qui présente une pluralité de dents de coupe (3) agencées autour d'un axe de rotation (5) et faisant saillie radialement du corps de base d'outil (11), lesquelles dents de coupe (3) présentent une face frontale (7), deux flancs de dents (6, 6') orientés à l'opposé l'un de l'autre et des arêtes de coupe (18, 19) aux bords des flancs de dents (6, 6) contigus à la face frontale (7) pour générer par enlèvement de copeaux des entredents (17) formant des flancs de dents (14, 14') sur la roue à usiner (1), **caractérisé en ce que** les flancs de dents (6, 6') de l'outil (2) sont réalisés abrasifs pour le traitement de finition des flancs de dents (14, 14) de la roue à usiner (1) générés par les arêtes de coupe (18, 19).

9. Outil selon la revendication 8, **caractérisé en ce que** les flancs de dents (6, 6') de l'outil (2) sont recouverts d'un revêtement abrasif, en particulier présentent un revêtement dur (26 à 28).

10. Outil selon une ou plusieurs des revendications précédentes, **caractérisé en ce que** les flancs de dents (6, 6') de l'outil (2) présentent des particules de matériau dur (27), en particulier du nitrite de bore, de l'oxyde d'aluminium ou des diamants, qui sont noyées dans une couche métallique (28), en particulier une couche de nickel.

11. Outil selon une ou plusieurs des revendications précédentes, **caractérisé en ce que** la direction d'extension des dents de coupe (3) est inclinée par rapport à l'axe de rotation (5).

12. Outil selon une ou plusieurs des revendications précédentes, **caractérisé en ce qu'**une ligne de crête (3') des dents de coupe (3) s'étend dans une surface d'enveloppe tronconique ou une surface d'enveloppe cylindrique autour de l'axe de rotation (5).

13. Dispositif pour la mise en œuvre d'un procédé selon l'une des revendications 1 à 7, avec un outil selon l'une des revendications 8 à 12, avec une broche d'outil (22) pouvant tourner autour d'un axe de rotation d'outil (5), avec une broche porte-pièce (21) pouvant tourner autour d'un axe de rotation de pièce (4), dont au moins une peut être entraînée en rotation par un moyen d'entraînement en rotation (9, 10), avec des moyens (24, 25) pour générer une avance de l'outil (2) par rapport à la roue à usiner (1) et avec des moyens (24, 25) pour régler un angle de croisement d'axes (α₁, β₁ ; α₂, β₂) entre l'axe de rotation d'outil (5) et l'axe de rotation de pièce (4) et avec un dispositif de commande électronique (23) pour commander au moins le moyen d'entraînement en rotation (9, 10), **caractérisé en ce que** le dispositif de commande (23) est agencé pour, dans une première étape de procédé, usiner par enlèvement de copeaux avec les arêtes de coupe (18, 19) des entredents (17) formant des flancs de dents (14, 14') dans la roue à usiner (1) dans une première position de l'outil (2) par rapport à la roue à usiner (1), et pour, dans une deuxième étape du procédé, opérer un traitement de finition des flancs de dents (14, 14') de la roue à usiner (1) générés par les arêtes de coupe (18, 19), par une surface d'outil abrasive formée par les flancs de dents (6, 6') de l'outil (2), la deuxième étape du procédé étant exécutée dans une deuxième position qui est différente de la première position.
